# EUROPÄISCHE PATENTSCHRIFT

(11) **EP 1 868 759 B1**
(45) Veröffentlichungstag und Bekanntmachung des Hinweises auf die Patenterteilung: **22.10.2008**
(21) Anmeldenummer: 06724121.6
(22) Anmeldetag: 07.04.2006
(51) Int. Cl.: B23D 79/00, F16D 65/092, F16D 69/04

(54) **VORRICHTUNG ZUM HERAUSARBEITEN VON ABSTEHENDEN VORSPRÜNGEN, ZÄHNEN, SPÄNEN, KRIMPEN ODER DERGLEICHEN AUS EINER BREMSBELAGTRÄGERPLATTE**
DEVICE FOR FORMING PROTRUDING PROJECTIONS, TEETH, CHIPS, CRIMPINGS OR THE LIKE FROM A BRAKE LINING SUPPORT PLATE
DISPOSITIF POUR FORMER DES PARTIES SAILLANTES, DES DENTS, DES COPEAUX, DES RETRAITS OU SIMILAIRE DANS UNE PLAQUE SUPPORT DE GARNITURE DE FREIN

(30) Priorität: 11.04.2005 DE 102005016466
(43) Veröffentlichungstag der Anmeldung: 26.12.2007
(73) Patentinhaber: AML Lanxide Europe GmbH, 53340 Meckenheim (DE)
(72) Erfinder: JUNG, Friedrich, H., 65520 Waldbrunn-Ellar (DE)
(74) Vertreter: Müller, Eckhard
(86) Internationale Anmeldenummer: PCT/EP2006/003180
(87) Internationale Veröffentlichungsnummer: WO 2006/108567

(56) Entgegenhaltungen:
- US-B1- 6 431 331

## Beschreibung

Die Erfindung betrifft eine Vorrichtung zum Herausarbeiten von abstehenden Vorsprüngen, Zähnen, Spänen, Krimpen oder dergleichen aus einer Bremsbelagträgerplatte, mit einer Werkzeugeinheit, welche mittels eines Pressteils in die Bremsbelagträgerplatte hineingetrieben und anschließend wieder von dieser entfernt wird, wobei die Werkzeugeinheit aus mehreren Werkzeugelementen mit Schneidezähnen besteht und während des Krimp-Vorganges in Richtung einer mit einer Flächennormalen der Bremsbelagträgerplatte im Wesentlichen übereinstimmenden ersten Achse und in Richtung einer hierzu senkrechten zweiten Achse verfahren wird und mit zwischen Pressteil und Werkzeugeinheit angeordneten Zwangssteuerungsmitteln zum Verfahren der Werkzeugeinheit in Richtung der ersten Achse sowie Zwangsführungsmitteln zum Verfahren der Werkzeugeinheit in Richtung der zweiten Achse.

### Stand der Technik

Eine Vorrichtung gemäß dem Oberbegriff von Anspruch 1 ist aus der US 6 431 331 bekannt.

Ähnliche Vorrichtungen sind aus der WO 00/49308 A1 und der DE 103 26 962 B3 bekannt. Die Werkzeugeinheit zum Herausarbeiten von abstehenden Vorsprüngen, Zähnen, Spänen, Krimpen oder dergleichen aus einer Bremsbelagträgerplatte besteht dort aus mehreren gegenläufig gegeneinander verstellbaren Werkzeugelementen. Dadurch werden aus der Bremsbelagträgerplatte abstehende Vorsprünge jeweils unter Bildung von Vertiefungen in Reihen in der Weise herausgearbeitet, dass die Position von abstehenden Vorsprung und Vertiefung zwischen benachbarten Reihen alterniert. Mit anderen Worten, es laufen die beim Krimp-Vorgang erzeugten abstehenden Vorsprünge und zugehörigen Vertiefungen benachbarter Reihen in entgegengesetzte Richtung.

Die mittels der bekannten Vorrichtungen bearbeiteten Bremsbelagträgerplatten weisen damit Reihen mit abstehenden Vorsprüngen und zugehörigen Vertiefungen auf, welche auf einer Seite mit einer Vertiefung enden. Durch diese Vertiefungen, welche üblicherweise im Randbereich des auf die Bremsbelagträgerplatte aufgebrachten Reibbelages liegen, wird ein Ansammeln von Feuchtigkeit und damit ein Lösen des Reibbelages von der Bremsbelagträgerplatte in diesem Bereich (Edge-Lifting) begünstigt. Darüber hinaus weisen die bekannten Vorrichtungen aufgrund ihrer gegenläufig gegeneinander verstellbaren Werkzeugelemente, insbesondere im Bereich der Werkzeugelementaufnahme, eine aufwendige Konstruktion auf.

### Aufgabenstellung

Davon ausgehend liegt der vorliegenden Erfindung die Aufgabe zugrunde, eine Vorrichtung mit den eingangs genannten Merkmalen anzugeben, durch welche eine dahingehend verbesserte Bremsbelagträgerplatte bereitgestellt werden kann, bei der die Gefahr eines Ablösens des Reibbelages von der Bremsbelagträgerplatte, insbesondere im Kantenbereich des Reibbelages, vermieden wird. Ferner soll die Vorrichtung eine einfache Konstruktion aufweisen.

### Erfindung und vorteilhafte Wirkungen

Diese Aufgabe wird mit einer Vorrichtung gemäß Anspruch 1 gelöst.

Durch die Maßnahme, wonach die Werkzeugelemente relativ zueinander lagefest angeordnet sind, ist erreicht, dass sich beim Verfahren der Werkzeugeinheit in Richtung der zweiten Achse die Werkzeugelemente in die gleiche Richtung bewegen. Es lassen sich dadurch auf der Bremsbelagträgerplatte Reihen mit abstehenden Vorsprüngen und zugehörigen Vertiefungen erzeugen, welche an einer Seite der Bremsbelagträgerplatte alle mit einem abstehenden Vorsprung enden und an den gegenüberliegenden Enden eine Vertiefung aufweisen. In einem anschließenden Arbeitsschritt können dann, beispielsweise nach einem Verdrehen der Bremsbelagträgerplatte auf dem Bearbeitungstisch der Vorrichtung um 180°, die Reihen derart verlängert werden, dass sie auch an ihrem anderen Ende einen abstehenden Vorsprung aufweisen.

Die mittels der erfindungsgemäßen Vorrichtung auf diese Weise herstellbare Anordnung von abstehenden Vorsprüngen wirkt einem Ablösen der Kanten des Reibbelages auf der Bremsbelagträgerplatte entgegen, da durch die am Anfang und am Ende der Reihen vorliegenden abstehenden Vorsprünge ein Eindringen von Feuchtigkeit in den Kantenbereich des Reibbelages verhindert wird. Aufgrund der lagefesten Anordnung der Werkzeugelemente zueinander ergibt sich darüber hinaus ein einfacher konstruktiver Aufbau der Werkzeugeinheit.

Nach der Erfindung ist es vorgesehen, dass die Werkzeugelemente in ihrer Längserstreckung fächerförmig ausgerichtet sind. hierdurch auf der Bremsbelagträgerplatte erzeugte Ausrichtung der Vorsprünge wird der äußeren Kontur des Reibbelages, insbesondere bei den üblichen Scheibenbremsen, Rechnung getragen und damit einem Eindringen von Feuchtigkeit in den Randbereich zwischen Reibbelag und Bremsbelagträgerplatte zusätzlich entgegengewirkt.

Nach einer ersten Ausgestaltung der Erfindung ist es vorgesehen, dass die Werkzeugelemente in einer Werkzeugaufnahme gehalten sind und für eine fächerförmige Ausrichtung wenigstens ein Distanzstück zwischen benachbarten Werkzeugelementen angeordnet ist. Hierdurch lassen sich die Werkzeugelemente in einem definierten Abstand zueinander in einfacher Weise fächerförmig ausrichten. Die sich hierdurch ergebende fächerförmige Anordnung der Vorsprünge auf der Belagträgerplatte hat den Vorteil, dass die Oberflächenstruktur an die Kontur des Reibbelages der Belagträgerplatte angepasst werden kann.

Dabei bietet es sich an, wenn das Distanzstück reib- und/oder formschlüssig gehalten ist, um ein Herausfallen aus der Werkzeugaufnahme, beispielsweise während des Anhebens der Werkzeugelemente nach dem Bearbeitungsvorgang, zu vermeiden. Besonders einfach ist das Distanzstück fixierbar, wenn es an einem der beiden benachbarten Werkzeugelemente angeschweißt wird.

Von Vorteil ist es, wenn die Werkzeugelemente zwischen Anlageelementen der Werkzeugaufnahme einspannbar sind. Hierdurch kann eine exakte Lagepositionierung der Werkzeugelemente in der Werkzeugaufnahme erzielt werden.

Vorteilhaft ist es ferner, wenn die Werkzeugelemente mittels eines der Anlageelemente der Werkzeugaufnahme gegen ein Verschieben in Richtung der ersten (vertikalen) Achse sicherbar sind. Dadurch kann ein Herausfallen der Werkzeugelemente aus der Werkzeugaufnahme, beispielsweise beim Anheben der Werkzeugaufnahme nach dem Bearbeitungsvorgang, vermieden werden.

Nach einer weiteren Ausgestaltung der Erfindung ist es vorgesehen, dass die Zähne der Werkzeugelemente in Kreisbögen oder auf Ellipsenbahnen verteilt angeordnet sind. Hierdurch kann auf der Bremsbelagträgerplatte eine Anordnung von Vorsprüngen erzeugt werden, welche an die Kontur der üblichen Reibbeläge für die Bremsbelagträgerplatte angepasst ist, wodurch besonders wirkungsvoll einem Edge-Lifting entgegengewirkt wird.

Eine derartige Anordnung der Zähne ist besonders einfach herzustellen, wenn die Werkzeugelemente gleich ausgebildet sind.

In diesem Fall bietet es sich an, wenn die Verteilung der Zähne durch eine kreisbogenförmig oder ellipsenförmig geformte Anlagekante eines der Anlageelemente gebildet ist. Hierdurch ergibt sich die Verteilung der Zähne in Kreisbögen beziehungsweise auf Ellipsenbahnen in einfacher Weise durch Anlegen der Enden der Werkzeugelemente an die Anlagekante.

Schließlich ist es von Vorteil, wenn die Zahnspitzen in Verschieberichtung weisen. Hierdurch kann eine hohe Schneidwirkung beim Bearbeitungsvorgang sichergestellt und damit ein sauberes Herausarbeiten der Vorsprünge aus der Bremsbelagträgerplatte gewährleistet werden.

Nach einer weiteren Ausgestaltung der Erfindung ist es vorgesehen, dass die Zwangsführungsmittel wenigstens ein Schiebeelement aufweisen, welches durch eine vorzugsweise hydraulische oder pneumatische Verstelleinrichtung betätigbar ist und beim oder nach dem Absenken des Pressteils die Werkzeugeinheit in Richtung der zweiten Achse bewegt. Mittels der Verstelleinrichtung kann das Schiebeelement unabhängig von der Bewegung der Werkzeugeinheit in Richtung der ersten Achse betätigt werden.

Nach einer alternativen Ausgestaltung ist es auch möglich, dass die Zwangsführungsmittel wenigstens ein Schiebeelement und wenigstens eine in Richtung der ersten Achse an dem Pressteil angeordnete Betätigungsstange aufweisen, welche aneinander gleitende Schrägflächen zum Verfahren des Schiebeelementes in Richtung der zweiten Achse beim Absenken des Pressteils aufweisen. Hierdurch ist eine Kopplung der Bewegungen in Richtung der ersten Achse und in Richtung der zweiten Achse erreicht, so dass mittels der auf das Pressteil wirkenden Hubkraft sowohl ein Absenken der Werkzeugeinheit auf die Bremsbelagträgerplatte und überlagernd mit dieser Bewegung ein Verfahren der Werkzeugeinheit in Richtung der zweiten Achse erreicht wird.

Eine weitere Ausgestaltung der Erfindung besteht darin, dass das Schiebeelement als Druckschieber mit von der Werkzeugeinheit weg gerichteter Schrägfläche oder Zugschieber mit zu der Werkzeugeinheit weisender Schrägfläche ausgebildet ist. Hierdurch kann je nach Bedarfs- beziehungsweise Anwendungsfall und räumlichen Gegebenheiten auf flexible Art und Weise, nämlich durch die Ausrichtung der Schrägflächen, die Verschieberichtung verändert werden, ohne dass dazu das Prinzip von Schiebeelement und Betätigungsstange aufgegeben werden muss.

Nach einer weiteren Ausgestaltung der Erfindung ist es vorgesehen, dass die Werkzeugeinheit gegen eine Rückstellkraft, insbesondere eine Kraft von mindestens einer sich gegen ein gehäusefestes Teil abstützenden Rückstellfeder, verschiebbar ist. Hierdurch ist ein einfacher Aufbau der Verstelleinrichtung möglich, da sie lediglich das Verfahren des Werkzeuges während des Krimp-Vorganges durchführt. Das Rückstellen der Werkzeugeinheit in ihre Ausgangsposition erfolgt durch die kostengünstige Rückstellfeder, und zwar selbsttätig beim Anheben der Werkzeugeinheit.

Nach einer vorteilhaften Ausgestaltung der Erfindung ist es vorgesehen, dass bei einem als Zugschieber ausgebildeten Schiebeelement die Rückstellkraft an der dem Schiebeelement zugewandten Seite der Werkzeugeinheit angreift. Dadurch ist es möglich, sowohl die Kraft für die Hinbewegung der Werkzeugeinheit beim Krimp-Vorgang als auch die Kraft für die Rückbewegung über die gleiche Seite der Werkzeugeinheit angreifen zu lassen. Es ist dadurch eine besonders kompakte Bauform des Betätigungssystemes erreichbar, da die Rückstellfeder und das Schiebeelement auf der gleichen Seite der Werkzeugeinrichtung angeordnet werden können.

Bei einem als Druckschieber ausgebildeten Schiebeelement bietet es sich an, dass die Rückstellkraft an der dem Schiebeelement gegenüberliegend abgewandten Seite der Werkzeugeinheit angreift. Dadurch kann ein einfacher und kostengünstiger Aufbau zum Verfahren und Rückverfahren der Werkzeugeinheit in Richtung der zweiten Achse realisiert werden.

Es ist vorgesehen, dass der in Richtung der zweiten Achse erzeugte Verfahrweg für das Werkzeug 3 mm bis 7 mm, vorzugsweise etwa 5 mm beträgt. Dadurch ist ein ausreichend großer Verfahrweg beziehungsweise Vorschub sichergestellt, um die gewünschten Vorsprünge, Zähne, Späne, Krimpen oder dergleichen aus der Bremsbelagträgerplatte zu erzeugen.

Nach einer bevorzugten Ausgestaltung der Erfindung ist es vorgesehen, dass zwei Werkzeugeinheiten mit Werkzeugelementen zum gemeinsamen Bearbeiten einer oder zweier Bremsbelagträgerplatten vorgesehen sind, welche zum Erzeugen der Vorsprünge, Zähne, Späne, Krimpen oder dergleichen in entgegengesetzter Richtung mittels jeder Werkzeugeinheit zugeordnetem Schiebeelement verfahrbar sind. Beim Bearbeiten einer Bremsbelagträgerplatte können dadurch in einem Arbeitstakt zwei Abschnitte mit Vorsprüngen unter Bildung von zugehörigen Vertiefungen in der Weise aus der Bremsbelagträgerplatte herausgearbeitet werden, dass die Vorsprünge und Vertiefungen der beiden Abschnitte gegenläufig zueinander angeordnet sind. Insbesondere können die bearbeiteten Bremsbelagträgerplatten Reihen mit Vorsprüngen und zugehörigen Vertiefungen aufweisen, welche jeweils an beiden Enden mit einem Vorsprung versehen sind. Darüber hinaus ist eine besonders bauteilschonende Bearbeitung möglich, da die in Richtung der zweiten Achse im Bauteil beziehungsweise in der Bremsbelagträgerplatte wirkenden Kräfte sich gegenseitig kompensieren.

Ein zeitaufwendiges Umrüsten des Werkzeuges beziehungsweise Umspannen des Bremsbelagträgers ist dabei nicht erforderlich. Nicht zuletzt dadurch bietet sich eine derartige Vorrichtung insbesondere bei großen mit Vorsprüngen zu versehenden Flächen an, wie beispielsweise bei Bremsbelagträgerplatten für Lastkraftwagen oder bei einer in Richtung der Längsachse der Bremsbelagträgerplatte zu bearbeitenden Fläche. Schließlich können auf diese Weise auch zwei Bremsbelagträgerplatten in einem Arbeitstakt bearbeitet werden, so dass sich durch diese Maßnahme mit einer Vorrichtung die Anzahl bearbeiteter Bremsbelagträgerplatten verdoppeln lässt.

Von Vorteil ist es, wenn die Werkzeugeinheiten zwischen den beiden Schiebeelementen angeordnet sind. Aufgrund der symmetrischen Ausbildung ist ein konstruktiv einfacher Aufbau erreicht.

Je nach gewünschter Anordnung der Vorsprünge auf der Bremsbelagträgerplatte kann es vorgesehen sein, dass bei fächerförmiger Anordnung die Werkzeugelemente der beiden Werkzeugeinheiten in entgegengesetzter Richtung oder in die gleiche Richtung divergieren.

Dabei bietet es sich an, dass bei in die gleiche Richtung divergierender Anordnung die Werkzeugelemente der beiden Werkzeugeinheiten ein im wesentlichen gleiches Konvergenzzentrum aufweisen. Die hierdurch erzeugte Anordnung von Vorsprüngen auf der Bremsbelagträgerplatte entspricht der Kontur üblicher Reibbeläge für die Bremsbelagträgerplatte in besonderer Weise, so dass dadurch einem möglichen Edge-Lifting des Reibbelages von der Bremsbelagträgerplatte besonders wirksam entgegengewirkt wird.

Alternativ kann es selbstverständlich auch vorgesehen sein, dass die Werkzeugelemente der beiden Werkzeugeinheiten jeweils fächerförmig aufeinander zulaufen.

Dabei besteht eine weitere bevorzugte Ausgestaltung der Erfindung darin, dass sich die Werkzeugeinheiten in der Ausgangsposition überschneiden, wobei die Enden benachbarter Werkzeugelemente der einen Werkzeugeinheit zwischen den Enden benachbarter Werkzeugelemente der anderen Werkzeugeinheit zu liegen kommen. Hierdurch ist ein Überschneidungsbereich geschaffen, in welchem auf der Bremsbelagträgerplatte in einem entsprechenden Bereich eine größere Anzahl an Vorsprüngen herausgearbeitet und dort eine besonders hohe Haltewirkung des Reibbelages realisiert wird.

Nach einer weiteren Ausgestaltung der Erfindung ist es vorgesehen, dass die Zwangssteuerungsmittel einen Keilschieber und Führungsschieber mit korrespondierenden Schrägflächen umfassen. Hierdurch ist zum einen ein definiertes Krimpen der Bremsbelagträgerplatte möglich und zum anderen auch ein definiertes Entfernen der mindestens einen Werkzeugeinheit von der Bremsbelagträgerplatte, ohne dass eine Gefahr des Abbrechens der Vorsprünge, Zähne, Späne oder dergleichen besteht.

Von Vorteil ist es, wenn zwischen Pressteil und Keilschieber ein Distanzstück mit mindestens einer Druckfeder vorgesehen ist, welche sich gegen das Pressteil abstützt. Die mindestens eine Druckfeder wirkt hierbei quasi als Stoßdämpfer für insbesondere beim Bearbeitungsvorgang wirkende Kräfte.

Von Vorteil ist es, wenn der Führungsschieber sich in ein Druckteil erstreckt und in diesem geführt ist. Hierdurch ist eine weitgehend spielfreie und damit exakte Bewegung des Führungsschiebers in Richtung der ersten Achse sichergestellt.

Auch bietet es sich an, dass der Keilschieber sich über ein Keilstück auf das Druckteil abstützt, wobei die Keilschrägen von Keilschieber und Keilstück miteinander korrespondieren. Hierdurch wird das Gleiten des Keilschiebers längs der Schrägführung des Führungsschiebers beim Absenken des Pressteils erleichtert.

Eine andere vorteilhafte Ausgestaltung besteht darin, dass der Keilschieber mittels einer Druckfeder, welche sich von einem weiteren Führungsschieber abstützt, vorgespannt ist. Hierdurch wird beim Anheben des Pressteils der Keilschieber durch die Druckfeder wieder in seine Ausgangsposition zurückgeschoben.

Weiterhin bietet es sich an, dass das Keilstück an einem durch das Druckteil hindurch greifenden Abschnitt eine Aufnahme für die Werkzeugaufnahme aufweist. Hierdurch kann sichergestellt werden, dass beim Anheben des Pressteils die Werkzeugaufnahme mit der Werkzeugeinheit von der Bremsbelagträgerplatte definiert abgehoben wird.

Nach einem weiteren Gedanken der Erfindung ist es vorgesehen, dass Führungselemente zum Führen der mindestens einen Betätigungsstange und der Führungsschieber an dem Druckteil angeordnet sind. Hierdurch ist ein quasi spielfreies Absenken der mindestens einen Werkzeugeinheit auf die Bremsbelagträgerplatte möglich, so dass die beim Herausarbeiten auf der Bremsbelagträgerplatte erzeugten Anordnungen von Vorsprüngen quasi nicht variieren.

In die gleiche Richtung geht die Maßnahme, dass das Pressteil beim Absenken oder Anheben geführt ist, vorzugsweise mittels wenigstens einem in Richtung der ersten Achse an dem Pressteil angeordneten Säulenelement, welches in einer Bohrung des Druckteils geführt ist.

### Ausführungsbeispiele

Weitere Ziele, Vorteile und Anwendungsmöglichkeiten der vorliegenden Erfindung ergeben sich aus der nachfolgenden Beschreibung zweier Ausführungsbeispiele anhand der Zeichnungen.

Es zeigen:
- Figur 1: eine mögliche Ausführungsform einer erfindungsgemäßen Vorrichtung zum Herausarbeiten von Vorsprüngen, Zähnen, Spänen, Krimpen oder dergleichen mit einer Werkzeugeinheit als Schnittdarstellung in Seitenansicht,
- Figur 2: die Vorrichtung gemäß Figur 1 als Ansicht von unten,
- Figur 3: die Werkzeugaufnahme der Vorrichtung gemäß Figur 1 mit darin gehaltenen Werkzeugelementen,
- Figur 4: eine weitere Ausführungsform der erfindungsgemäßen Vorrichtung mit zwei Werkzeugeinheiten als Schnittdarstellung in Seitenansicht,
- Figur 5: die Vorrichtung gemäß Figur 4 als Ansicht von unten,
- Figur 6: die Werkzeugaufnahmen der Vorrichtung gemäß Figur 4 mit darin gehaltenen Werkzeugelementen,
- Figur 7: eine Weiterbildung der Vorrichtung gemäß Figur 4 mit zwei Werkzeugeinheiten als Schnittdarstellung in Seitenansicht,
- Figur 8: die Bauteile zum Verfahren einer der Werkzeugeinheiten der Vorrichtung gemäß Figur 6 als Ansicht von unten und
- Figur 9: eine andere Ausführungsform der erfindungsgemäßen Vorrichtung mit zwei Werkzeugeinheiten als Schnittdarstellung in Seitenansicht.

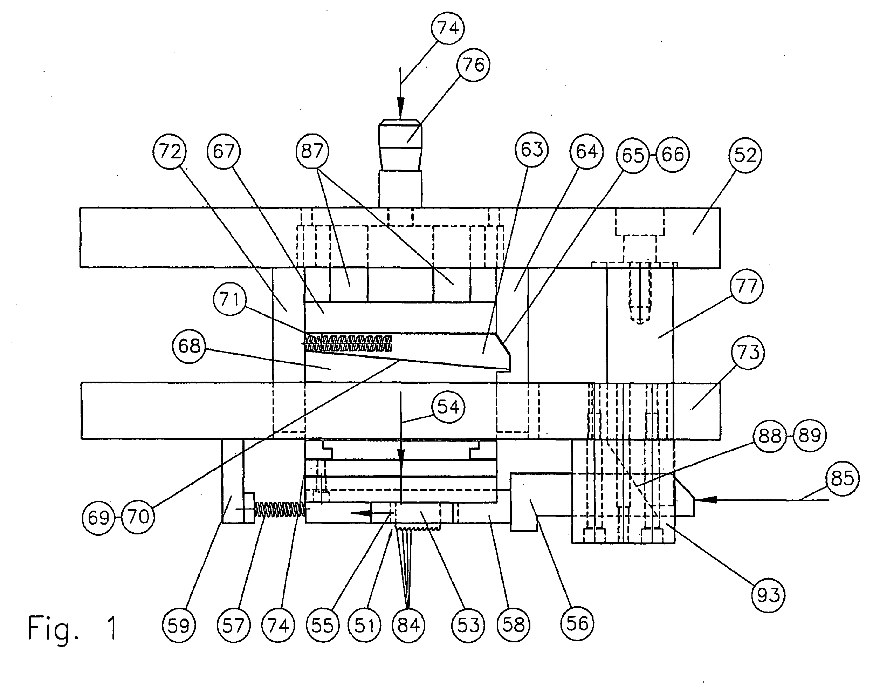

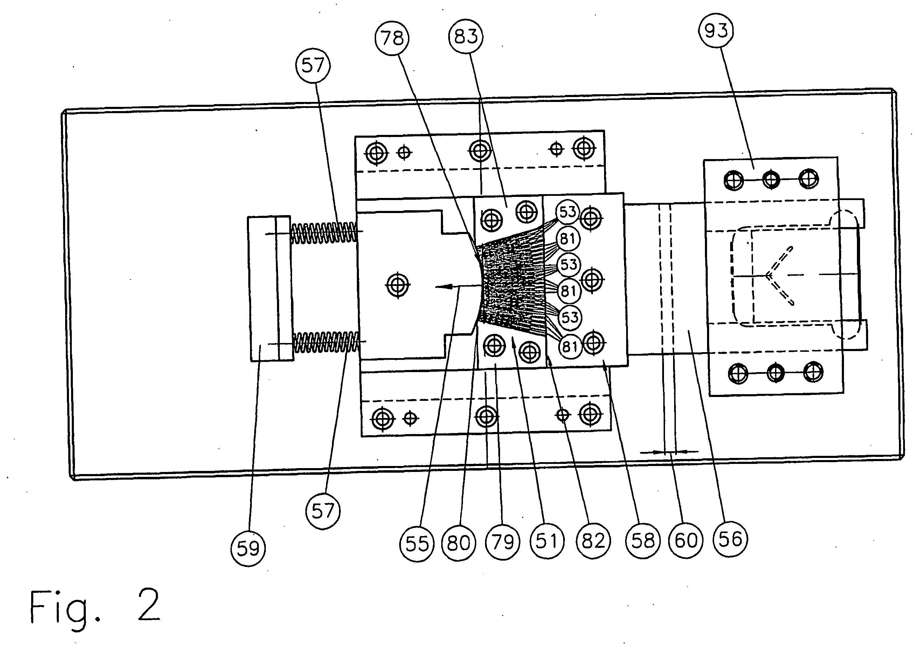

Die Figuren 1 und 2 zeigen - in schematischer Darstellung - eine Ausführungsform einer Vorrichtung zum Herausarbeiten von abstehenden Vorsprüngen, Zähnen, Spänen, Krimpen oder dergleichen aus einer Bremsbelagträgerplatte, mit einer Werkzeugeinheit 51, welche mittels eines vorzugsweise als Platte oder Balken ausgebildeten Pressteils 52 in die Bremsbelagträgerplatte hineingetrieben und anschließend wieder von dieser entfernt wird.

Während des Krimp-Vorganges wird die Werkzeugeinheit 51 in Richtung einer ersten Achse 54 und in Richtung einer hierzu senkrechten zweiten Achse 55 verfahren, wobei die erste Achse 54 mit einer Flächennormalen der Bremsbelagträgerplatte im Wesentlichen übereinstimmt.

Die Werkzeugeinheit 51 besteht aus mehreren Werkzeugelementen 53 mit Schneidezähnen 84. Die Werkzeugelemente 53 sind relativ zueinander lagefest angeordnet. Dadurch können Vorsprünge unter Bildung von Vertiefungen aus der Bremsbelagträgerplatte in Reihen derart herausgearbeitet werden, dass die Reihen bezüglich der Anordnung von Vertiefungen und zugehörigem Vorsprung jeweils in die gleiche Richtung weisen, so dass beispielsweise die Reihen an einer Seite der Bremsbelagträgerplatte alle mit einem Vorsprung enden.

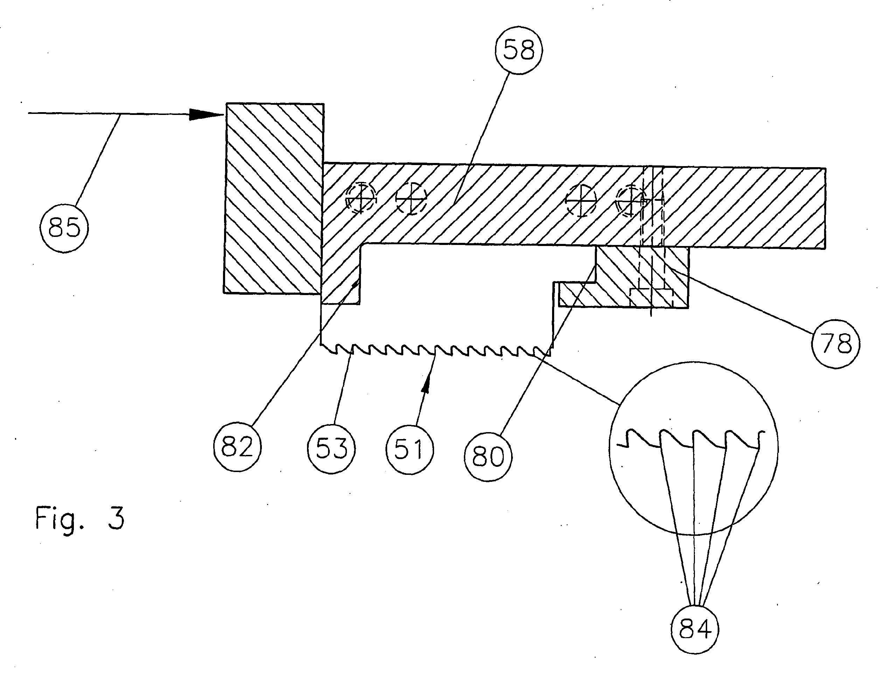

Wie insbesondere in Figur 3 erkennbar ist, sind die Werkzeugelemente 53 in einer Werkzeugaufnahme 58 gehalten und in ihrer Längserstreckung fächerförmig in Richtung der zweiten Achse 55 ausgerichtet. Dafür ist wenigstens ein Distanzstück 81 zwischen benachbarten Werkzeugelementen 53 angeordnet. Um zu verhindern, dass das Distanzstück 81 aus der Werkzeugaufnahme 58 herausfallen kann, ist es reib- und/oder formschlüssig gehalten. Vorzugsweise ist es an einem der beiden benachbarten Werkzeugelemente 53 angeschweißt.

Die Werkzeugelemente 53 sind zwischen Anlageelementen 78, 79, 82, 83 der Werkzeugaufnahme einspannbar. Ferner sind die Werkzeugelemente 53 mittels eines Anlageelementes 82 der Werkzeugaufnahme 58 gegen ein Verschieben in Richtung der ersten (vertikalen) Achse 54 sicherbar.

Die Werkzeugelemente 53 sind alle gleich ausgebildet und ihre Zähne sind auf Kreisbögen verteilt in der Werkzeugeinheit 51 angeordnet. Natürlich ist auch eine Anordnung der Zähne 84 verteilt auf Ellipsenbahnen möglich. Die Verteilung der Zähne 84 wird bevorzugt durch eine kreisbogenförmig geformte Anlagekante 80 eines der Anlageelemente 78, 82 gebildet. Wie insbesondere aus Figur 3 ersichtlich ist, weisen die Spitzen der Zähne 84 in Verschieberichtung 85 der Werkzeugeinheit 51.

Zum Verfahren der Werkzeugeinheit 51 in Richtung der zweiten Achse 55 weist die Vorrichtung Zwangsführungsmittel auf. Diese können beispielsweise durch wenigstens ein Schiebeelement gebildet sein, welches durch eine vorzugsweise hydraulische oder pneumatische Verstelleinrichtung betätigbar ist und sich beim oder nach dem Absenken des Pressteils 52 die Werkzeugeinheit 51 in Richtung der zweiten Achse 55 bewegt.

Wie insbesondere Figur 1 zeigt, können die Zwangsführungsmittel auch durch wenigstens ein Schiebeelement 56 und wenigstens ein in Richtung der ersten Achse 54 an dem Pressteil 52 angeordnete Betätigungsstange 77 gebildet sein, welche aneinander gleitende Schrägflächen 88, 89 zum Verfahren des Schiebeelementes 56 in Richtung der zweiten Achse 55 beim Absenken dem Pressteil 52 aufweisen. In diesem Fall bewirken die Schrägflächen 88, 89 bei einem Verfahren der Werkzeugeinheit 51 in Richtung der ersten Achse 54 immer auch ein Verfahren in Richtung der zweiten Achse 55.

Bei dem Ausführungsbeispiel gemäß der Figuren 1 bis 3 ist das Schiebeelement als Druckschieber 56 mit von der Werkzeugeinheit 51 weggerichteter Schrägfläche 88 ausgebildet. Die Werkzeugeinheit 51 ist ferner gegen eine Rückstellkraft, insbesondere eine Kraft von mindestens einer gegen ein gehäusefestes Teil 59 sich abstützenden Rückstellfeder 57, verschiebbar. Bei dem als Druckschieber ausgebildeten Schiebeelement 56 ist das gehäusefeste Teil 59 derartig gegenüber der Werkzeugeinheit 51 angeordnet, dass die Rückstellkraft an der dem Schiebeelement 56 abgewandten Seite der Werkzeugeinheit 51 angreift.

Der in Richtung der zweiten Achse 55 zurückgelegte Verfahrweg 60 der Werkzeugeinheit 51 beträgt 3 mm bis 7 mm, vorzugsweise etwa 5 mm. Selbstverständlich ist auch ein größerer beziehungsweise kleinerer Verfahrweg möglich.

Zum Verfahren der Werkzeugeinheit 51 in Richtung der ersten Achse 54 weist die Vorrichtung Zwangssteuerungsmittel auf, welche zwischen dem Pressteil 53 und dem Werkzeug 51 angeordnet sind. Die Zwangssteuerungsmittel umfassen einen Keilschieber 63 und einen Führungsschieber 64 mit korrespondierenden Schrägflächen 65, 66'. Zwischen Pressteil 52 und Keilschieber 63 ist ferner ein Distanzstück 67 mit mindestens einer Druckfeder 87 vorgesehen, welche sich gegen das Pressteil 52 abstützt.

Der Führungsschieber 64 erstreckt sich in ein Druckteil 73 und ist in diesem geführt. Das Druckteil 73 kann beispielsweise plattenförmig oder balkenförmig ausgebildet sein.

Der Keilschieber 63 stützt sich über ein Keilstück 68 auf dem Druckteil 52 ab, wobei die Keilschrägen 69, 70 von dem Keilschieber 63 und dem Keilstück 68 miteinander korrespondieren. Weiterhin ist der Keilschieber 63 mittels einer Druckfeder 71 vorgespannt, wobei sich die Druckfeder 71 von einem weiteren Führungsschieber 72 abstützt.

Das Keilstück 68 weist eine Aufnahme 74 für die Werkzeugaufnahme 58 auf, welche an einem durch das Druckteil 73 hindurch greifenden Abschnitt angeordnet ist.

Nachfolgend wird die Arbeitsweise der Vorrichtung beschrieben.

Ausgehend von einer Ausgangsstellung des Pressteils 52 befindet sich die Werkzeugaufnahme 58 mit der Werkzeugeinheit 51 in angehobener Stellung oberhalb der zu bearbeitenden Bremsbelagträgerplatte. Wenn nun Druck gemäß Pfeil 74 über ein Betätigungselement 76 auf das Pressteil 52 ausgeübt wird, wird dieses zusammen mit dem Druckteil 73 auf mindestens einer Betätigungsstange 77 nach unten in Richtung des zu bearbeitenden Werkstückes verschoben.

Ein weiteres Absenken des Pressteils 52 bewirkt nun, dass der Keilschieber 63 mit seiner stirnseitigen Formschräge 65 längs der Schrägführung 66 des Führungsschiebers 72 gleitet. Dadurch kommt es zu einem Absenken der Werkzeugaufnahme 58 mit dem Werkzeug 51 in Richtung des zu bearbeitenden Werkstückes mit Eingraben der Zähne in die Bremsbelagträgerplatte. Durch das Schiebeelement 56 wird nun die Werkzeugaufnahme 58 mit der Werkzeugeinheit 51 in Richtung der zweiten Achse 55 verschoben, wodurch die in die Bremsbelagträgerplatte eingreifenden Zähne jeweils unter Bildung einer Vertiefung durch Materialverdrängung in der Oberfläche der Bremsbelagträgerplatte einen abstehenden Vorsprung, Zahn, Span, Krimpe oder dergleichen erzeugen. Diese beiden Bewegungen, das heißt die Absenkbewegung der Werkzeugeinheit 51 mittels der nach unten gerichteten Druckkraft des Keilschiebers 63 und die Horizontalbewegung der Werkzeugeinheit 51, überlagern sich dabei und bewirken das Krimpen des Werkstückes.

Auch ist es möglich, dass diese beiden Bewegungen nacheinander vollzogen werden.

Nach dem Herausarbeiten der Vorsprünge aus der Bremsbelagträgerplatte wird das Pressteil 52 mit der Betätigungsstange 77 wieder angehoben und in ihre Ausgangsstellung gebracht. Bei der Aufwärtsbewegung der Betätigungsstange 77 wird das Schiebeelement 56 von der mindestens einen Rückstellfeder 57 in Richtung der zweiten Achse 55 zurückverschoben.

Durch den Krimp-Vorgang sind auf der Bremsbelagträgerplatte in Reihen angeordnete abstehende Vorsprünge mit zugehörigen Vertiefungen erzeugt, wobei die Reihen in ihrer Längserstreckung fächerförmig ausgerichtet vorliegen.

Sofern die Bremsbelagträgerplatte nach dem ersten Krimp-Vorgang um 180° um die erste Achse 54 gedreht auf dem Werkstücktisch der Vorrichtung eingespannt wird, können durch einen zweiten Krimp-Vorgang auf der Bremsbelagträgerplatte die Reihen mit abstehenden Vorsprüngen und zugehörigen Vertiefungen derart weitergeführt werden, dass sich nach dem zweiten Krimp-Vorgang am Anfang und am Ende jeder Reihe ein abstehender Vorsprung befindet.

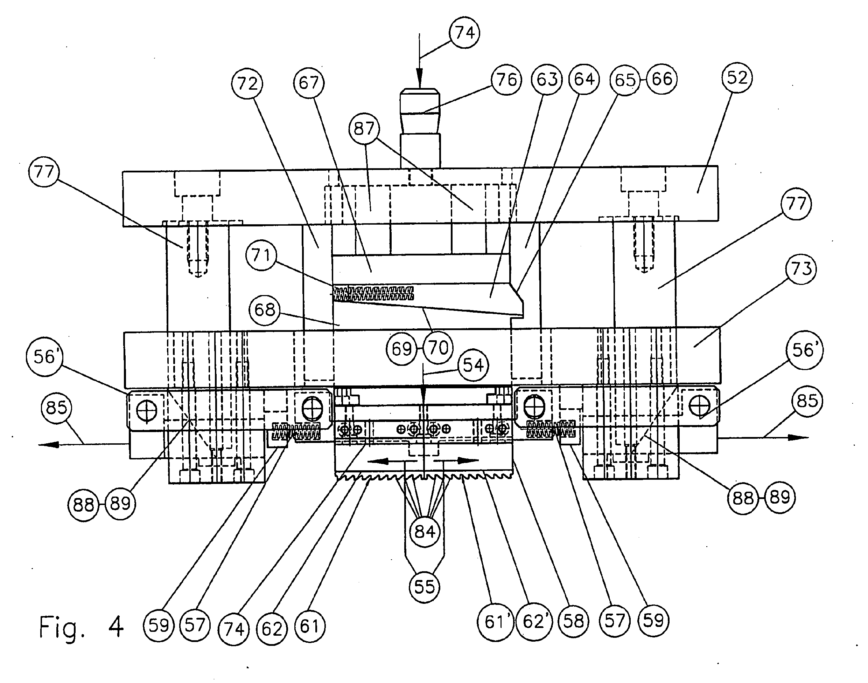

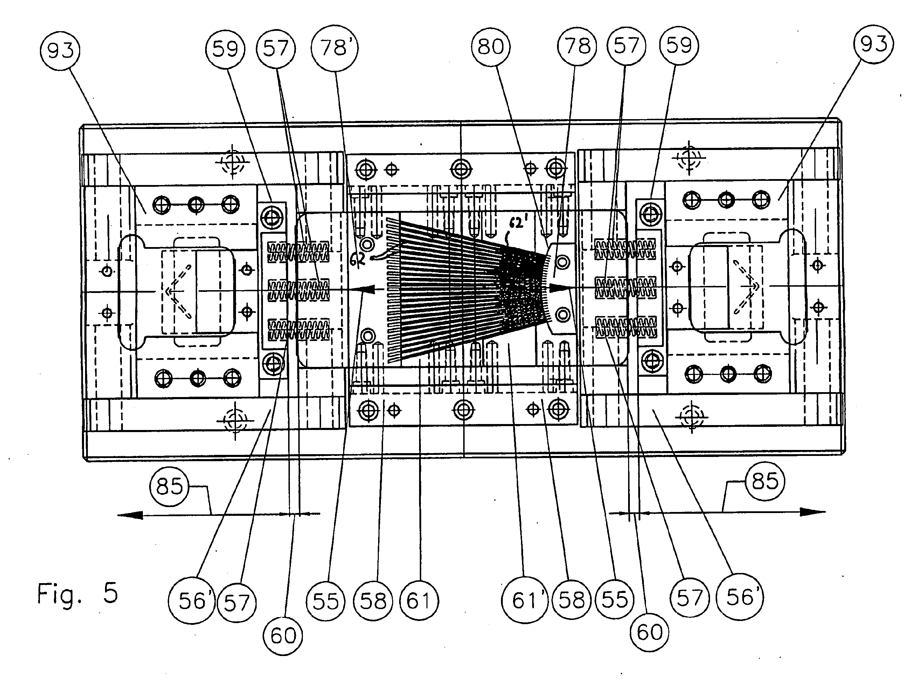

Die Figuren 4 und 5 zeigen in schematischer Darstellung eine weitere Ausführungsform der erfindungsgemäßen Vorrichtung. Bauteile, welche mit denen der Vorrichtung der Figuren 1 und 2 identisch sind, sind mit gleichen Bezugszeichen versehen; insoweit wird auf die Beschreibung zu den Figuren 1 und 2 verwiesen.

Die Ausführungsform der Vorrichtung gemäß der Figuren 4 und 5 unterscheidet sich von der Ausführungsform gemäß der Figuren 1 und 2 unter anderem dadurch, dass zwei Werkzeugeinheiten 61, 61' zum gemeinsamen Bearbeiten einer oder zweier Bremsbelagträgerplatten vorgesehen sind, welche zum Erzeugen der abstehenden Vorsprünge, Zähne, Späne, Krimpen oder dergleichen in entgegengesetzter Richtung verfahrbar sind. Die Werkzeugelemente 62, 62' der beiden Werkzeugeinheiten 61, 61' sind jeweils in ihrer Längserstreckung fächerförmig ausgerichtet, wobei die Werkzeugelemente 62, 62' der beiden Werkzeugeinheiten 61, 61' in die gleiche Richtung divergieren und ein im Wesentlichen gleiches Konvergenzzentrum aufweisen.

Selbstverständlich ist es bei fächerförmiger Anordnung auch möglich, dass die Werkzeugelemente 62, 62' der beiden Werkzeugeinheiten 61, 61' in die entgegengesetzte Richtung divergieren oder dass die Werkzeugelemente 62, 62' jeweils fächerförmig aufeinanderzulaufen.

Im Unterschied zu dem Ausführungsbeispiel gemäß der Figuren 1 und 2 ist bei dem Ausführungsbeispiel gemäß der Figuren 4 und 5 das Schiebeelement für die jeweilige Werkzeugeinheit 61, 61' als Zugschieber 56' mit zu der Werkzeugeinheit 61, 61' gerichteter Schrägfläche 88 ausgebildet. Dabei sind die Werkzeugeinheiten 61, 61' zwischen den Schiebeelementen 56' angeordnet. Bei dem jeweils als Zugschieber ausgebildeten Schiebeelement 56' greift die Rückstellkraft jeweils an der dem Schiebeelement 56' zugewandten Seite der Werkzeugeinheit 61, 61' an.

Bei der Ausführungsform mit zwei Werkzeugeinheiten 61, 61' gemäß der Figuren 4 und 5 ist jedes Schiebeelement 56' über eine separate Betätigungsstange 77 mittels der aneinander gleitenden Schrägflächen 88, 89 in Richtung der zweiten Achse 55 beim Absenken des Pressteils 52 verfahrbar. Dadurch kann in einem Arbeitstakt eine Bremsbelagträgerplatte mit in Reihen angeordneten abstehenden Vorsprüngen versehen werden, bei der die Reihen zwei Abschnitte mit gegenläufiger Anordnung von abstehenden Vorsprung und Vertiefung aufweisen und sich am Anfang und am Ende jeder Reihe ein abstehender Vorsprung befindet.

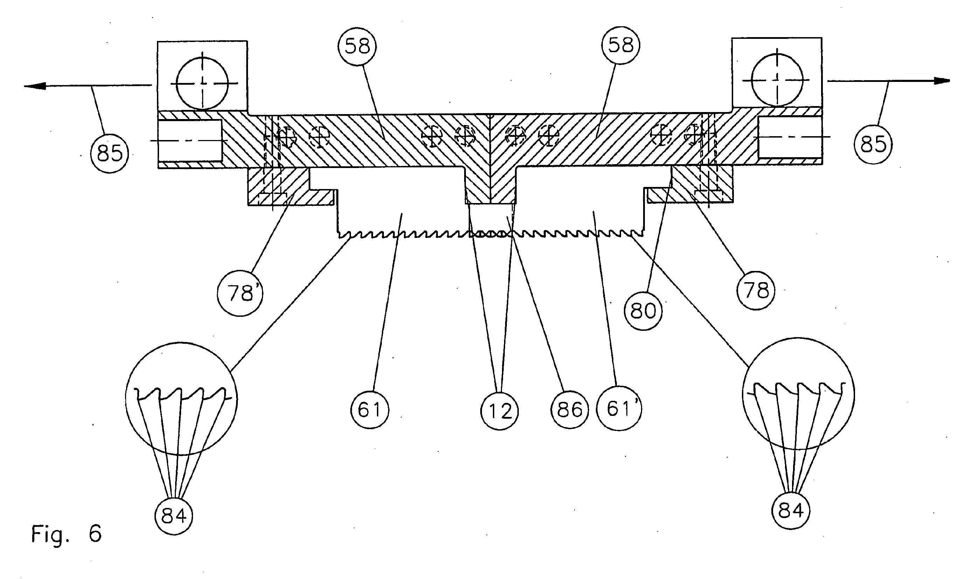

Eine mögliche Ausführungsform der Werkzeugaufnahme 58 der Vorrichtung gemäß der Figuren 4 und 5 zeigt Figur 6. Bauteile, welche mit den Bauteilen der Werkzeugaufnahme gemäß Figur 3 identisch sind, sind mit gleichen Bezugszeichen versehen; insoweit wird auf die Beschreibung zu Figur 3 verwiesen.

Figur 6 zeigt die Anordnung der beiden Werkzeugeinheiten 61, 61' in der Ausgangsposition, in welcher sich die beiden Werkzeugeinheiten 61, 61' einen Überschneidungsbereich 86 aufweisen. Dort liegen die Enden benachbarter Werkzeugelemente 62 der einen Werkzeugeinheit 61 zwischen den Enden benachbarter Werkzeugelemente 62' der anderen Werkzeugeinheit 61'. Vorzugsweise überschneiden oder überlappen sich die Enden jeweils über zwei Zähne 84. Beide Werkzeugeinheiten 61, 61' sind jeweils durch ein Anlageelement 78, 78' der jeweiligen Werkzeugaufnahme 58 gegen ein Verschieben in Richtung der ersten Achse 54 sicherbar, wobei eine der Anlageelemente 78, 78' die kreisbogenförmige Anlagekante 80 aufweist, um die Zähne 84 der Werkzeugelemente 62, 62' in Kreisbögen verteilt auszurichten.

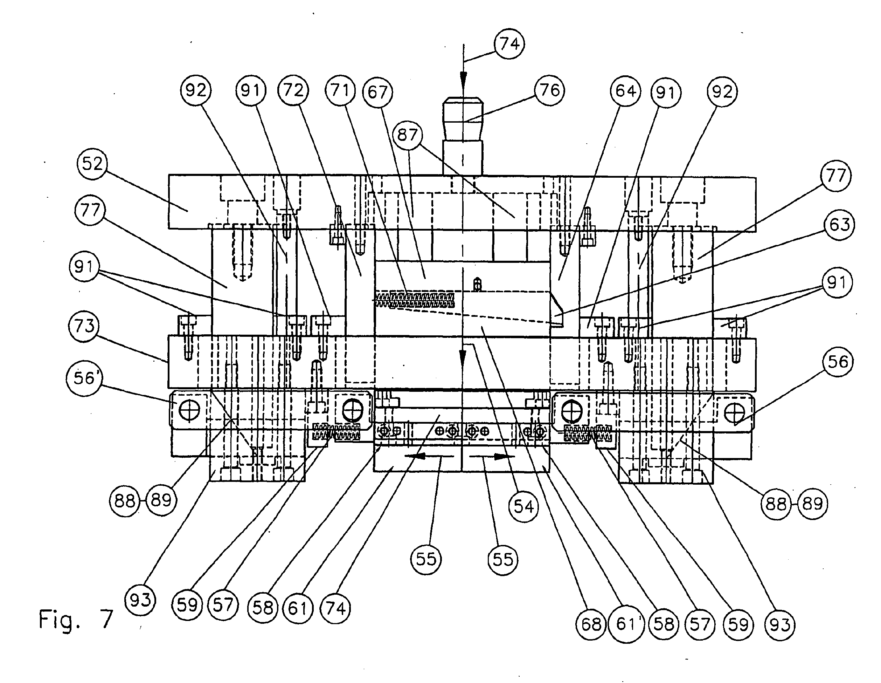

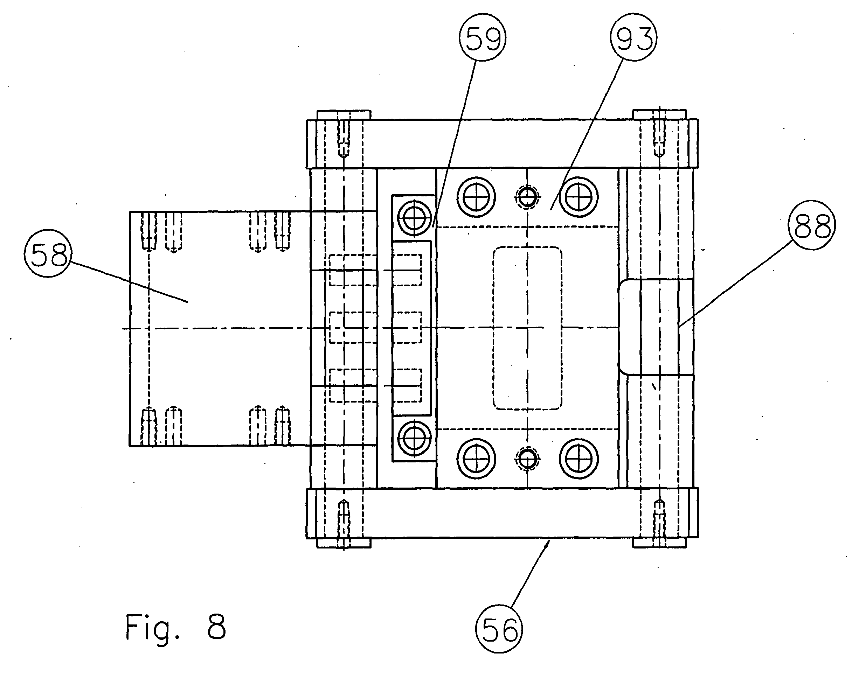

Die Figuren 7 und 8 zeigen eine Weiterentwicklung des Ausführungsbeispiels gemäß der Figuren 5 und 6. Es sind dort unter anderem Führungselemente 91 zum Führen der mindestens einen Betätigungsstange 77 und der Führungsschieber 64, 72 an dem Druckteil 73 angeordnet. Ferner ist das Pressteil 52 beim Absenken oder Anheben geführt, vorzugsweise mittels wenigstens einem in Richtung der ersten Achse 54 an dem Pressteil 52 angeordneten Säulenelement 92, welches in einer Bohrung des Druckteils 73 geführt ist. Wie aus Figur 8 ersichtlich ist, ist ferner eine Führung 93 für das Schiebeelement 56' vorgesehen.

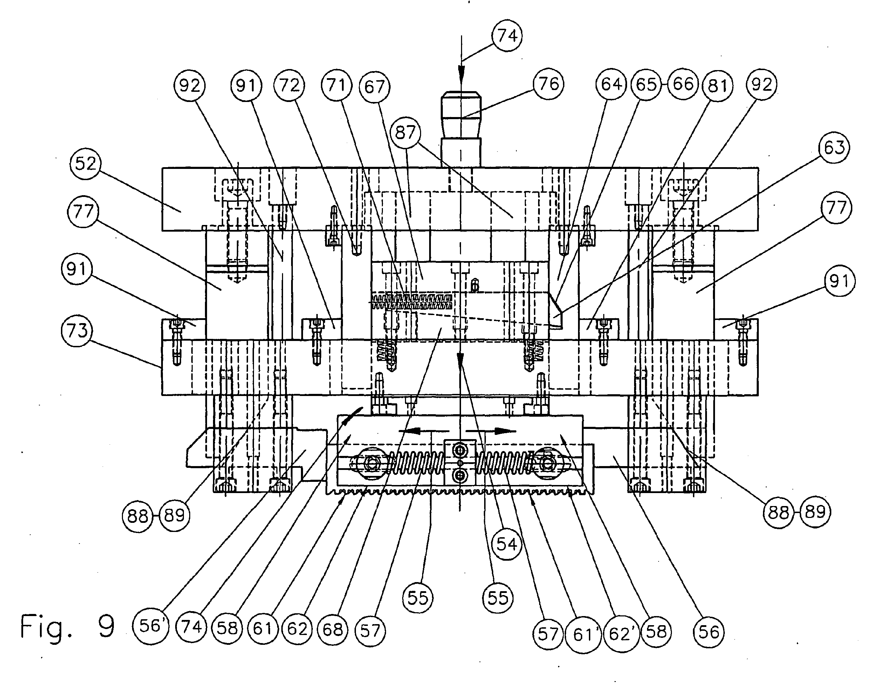

Ein anderes Ausführungsbeispiel der erfindungsgemäßen Vorrichtung mit zwei Werkzeugeinheiten 61, 61' zeigt Figur 9. Bauteile, welche identisch mit den Bauteilen der Ausführungsbeispiele gemäß der vorangegangenen Figuren identisch sind, sind mit gleichen Bezugszeichen versehen. Das Ausführungsbeispiel gemäß der Figur 9 unterscheidet sich von dem Ausführungsbeispiel gemäß der Figuren 7 und 8 unter anderem dadurch, dass die Schiebeelemente als Druckschieber mit von der jeweiligen ihnen zugeordneten Werkzeugeinheit 61 beziehungsweise 61' weggerichteter Schrägfläche 88 ausgebildet sind. In diesem Fall werden beim Absenken des Pressteils 52 die Werkzeugeinheiten 61, 61' in entgegengesetzte Richtung aufeinanderzu verfahren.

### Bezugszeichenliste

- 51: Werkzeugeinheit
- 52: Pressteil
- 53: Werkzeugelemente
- 54: erste Achse
- 55: zweite Achse
- 56: Schiebeelement
- 56': Schiebeelement
- 57: Rückstellfeder
- 58: Werkzeugaufnahme
- 59: gehäusefestes Teil
- 60: Verfahrweg
- 60, 61': Werkzeugeinheit
- 62, 62': Werkzeugelemente
- 63: Keilschieber
- 64: Führungsschieber
- 65: Schrägfläche
- 66: Schrägfläche
- 67: Distanzstück
- 68: Keilstück
- 69: Keilschräge
- 70: Keilschräge
- 71: Druckfeder
- 72: Führungsschieber
- 73: Druckteil
- 74: Aufnahme
- 77: Betätigungsstange
- 78: Anlageelement
- 80: Anlagekante
- 81: Distanzstück
- 82: Anlageelement
- 84: Schneidezähne
- 85: Verschieberichtung
- 86: Überschneidungsbereich
- 87: Druckfeder
- 88: Schrägfläche
- 89: Schrägfläche
- 91: Führungselemente
- 92: Säulenelement
- 93: Führung

## Patentansprüche

1. Vorrichtung zum Herausarbeiten von abstehenden Vorsprüngen, Zähnen, Spänen, Krimpen oder dergleichen aus einer Bremsbelagträgerplatte, mit einer Werkzeugeinheit (51; 61, 61'), welche mittels einem Pressteil (52) in die Bremsbelagträgerplatte hineingetrieben und anschließend wieder von dieser entfernt wird, wobei die Werkzeugeinheit (51; 61, 61') aus mehreren Werkzeugelementen (53; 62, 62') mit Schneidezähnen (84) besteht und während des Krimp-Vorganges in Richtung einer mit einer Flächennormalen der Bremsbelagträgerplatte im wesentlichen übereinstimmenden ersten Achse (54) und in Richtung einer hierzu senkrechten zweiten Achse (55) verfahren wird und mit zwischen Pressteil (52) und Werkzeugeinheit (51; 61, 61') angeordneten Zwangssteuerungsmitteln zum Verfahren der Werkzeugeinheit (51; 61, 61') in Richtung der ersten Achse (54) sowie Zwangsführungsmitteln zum Verfahren der Werkzeugeinheit (51; 61, 61') in Richtung der zweiten Achse (55), wobei die Werkzeugelemente (53; 62, 62') der Werkzeugeinheit (51; 61, 61') relativ zueinander lagefest angeordnet sind, **dadurch gekennzeichnet, dass** die Werkzeugelemente (53; 62, 62') in ihrer Längserstreckung fächerförmig ausgerichtet sind.

2. Vorrichtung nach Anspruch 1, **dadurch gekennzeichnet, dass** die Werkzeugelemente (53; 62, 62') in einer Werkzeugaufnahme (58) gehalten sind und für eine fächerförmige Ausrichtung wenigstens ein Distanzstück (81) zwischen benachbarten Werkzeugelementen (53; 62, 62') angeordnet ist.

3. Vorrichtung nach Anspruch 1 oder 2, **dadurch gekennzeichnet, dass** das Distanzstück (81) reib- und/oder formschlüssig gehalten ist, insbesondere an einem der beiden benachbarten Werkzeugelemente (53; 62, 62') angeschweißt ist.

4. Vorrichtung nach Anspruch 2 oder 3, **dadurch gekennzeichnet, dass** die Werkzeugelemente (53; 62, 62') zwischen Anlageelementen (78, 79, 82, 83) der Werkzeugaufnahme (58) einspannbar sind.

5. Vorrichtung nach Anspruch 4, **dadurch gekennzeichnet, dass** die Werkzeugelemente (53; 62, 62') mittels eines Anlageelementes (82) der Werkzeugaufnahme (58) gegen ein Verschieben in Richtung der ersten Achse (54) sicherbar sind.

6. Vorrichtung nach einem der vorhergehenden Ansprüche, **dadurch gekennzeichnet, dass** die Schneidezähne (84) der Werkzeugelemente (53; 62, 62') in Kreisbögen oder auf Ellipsenbahnen verteilt angeordnet sind.

7. Vorrichtung nach einem der vorhergehenden Ansprüche, **dadurch gekennzeichnet, dass** die Werkzeugelemente (53; 62, 62') gleich ausgebildet sind.

8. Vorrichtung nach Anspruch 7, **dadurch gekennzeichnet, dass** die Verteilung der Schneidezähne (84) durch eine kreisbogenförmig oder ellipsenförmig geformte Anlagekante (80) eines der Anlageelemente (78, 82) gebildet ist.

9. Vorrichtung nach einem der vorhergehenden Ansprüche, **dadurch gekennzeichnet, dass** die Zahnspitzen in Verschieberichtung (85) weisen.

10. Vorrichtung nach einem der vorhergehenden Ansprüche, **dadurch gekennzeichnet, dass** die Zwangsführungsmittel durch wenigstens ein Schiebeelement gebildet sind, welches durch eine vorzugsweise hydraulische oder pneumatische Verstelleinrichtung betätigbar ist und sich beim oder nach dem Absenken des Pressteils (52) die Werkzeugeinheit (51; 61, 61') in Richtung der zweiten Achse (55) bewegt.

11. Vorrichtung nach einem der Ansprüche 1 bis 9, **dadurch gekennzeichnet, dass** die Zwangsführungsmittel durch wenigstens ein Schiebeelement (56, 56') und wenigstens eine in Richtung der ersten Achse (54) an dem Pressteil (52) angeordnete Betätigungsstange (77) gebildet ist, welche aneinander gleitende Schrägflächen (88, 89) zum Verfahren des Schiebeelementes (56, 56') in Richtung der zweiten Achse (55) beim Absenken des Pressteils (52) aufweisen.

12. Vorrichtung nach Anspruch 10 oder 11, **dadurch gekennzeichnet, dass** das Schiebeelement als Druckschieber (56) mit von der Werkzeugeinheit (51; 61, 61') weg gerichteter Schrägfläche (88) oder Zugschieber (56') mit zu der Werkzeugeinheit (51, 61, 61') gerichteter Schrägfläche (88) ausgebildet ist.

13. Vorrichtung nach einem der vorhergehenden Ansprüche, **dadurch gekennzeichnet, dass** die Werkzeugeinheit (51; 61, 61') gegen eine Rückstellkraft, insbesondere eine Kraft von mindestens einer sich gegen ein gehäusefestes Teil (59) abstützenden Rückstellfeder (57), verschiebbar ist.

14. Vorrichtung nach Anspruch 13, **dadurch gekennzeichnet, dass** bei einem als Zugschieber ausgebildeten Schiebeelement (56') die Rückstellkraft an der dem Schiebeelement (56') zugewandten Seite der Werkzeugeinheit (61, 61') angreift.

15. Vorrichtung nach Anspruch 13, **dadurch gekennzeichnet, dass** bei einem als Druckschieber ausgebildeten Schiebeelement (56) die Rückstellkraft an der dem Schiebeelement (56) gegenüberliegend abgewandten Seite der Werkzeugeinheit (51) angreift.

16. Vorrichtung nach einem der vorhergehenden Ansprüche, **dadurch gekennzeichnet, dass** der in Richtung der zweiten Achse (55) erzeugte Verfahrweg (60) für die Werkzeugeinheit (51; 61, 61') 3 mm bis 7 mm, vorzugsweise etwa 5 mm, beträgt.

17. Vorrichtung nach einem der vorhergehenden Ansprüche, **dadurch gekennzeichnet, dass** zwei Werkzeugeinheiten (61, 61') mit Werkzeugelementen (62, 62') zum gemeinsamen Bearbeiten einer oder zweier Bremsbelagträgerplatten vorgesehen sind, welche zum Erzeugen der abstehenden Vorsprünge, Zähne, Späne, Krimpen oder dergleichen in entgegengesetzter Richtung verfahrbar sind.

18. Vorrichtung nach Anspruch 17, **dadurch gekennzeichnet, dass** die Werkzeugeinheiten (61, 61') zwischen den Schiebeelementen (56, 56') angeordnet sind.

19. Vorrichtung nach Anspruch 17 oder 18, **dadurch gekennzeichnet, dass** bei fächerförmiger Anordnung die Werkzeugelemente (62, 62') der beiden Werkzeugeinheiten (61, 61') in entgegengesetzter Richtung oder in die gleiche Richtung divergieren.

20. Vorrichtung nach Anspruch 19, **dadurch gekennzeichnet, dass** bei in die gleiche Richtung divergierender Anordnung die Werkzeugelemente (62, 62') der beiden Werkzeugeinheiten (61, 61') ein im Wesentlichen gleiches Konvergenzzentrum aufweisen.

21. Vorrichtung nach Anspruch 19, **dadurch gekennzeichnet, dass** die Werkzeugelemente (62, 62') der beiden Werkzeuge (61, 61') jeweils fächerförmig aufeinander zulaufen.

22. Vorrichtung nach einem der Ansprüche 17 bis 21, **dadurch gekennzeichnet, dass** in der Ausgangsposition sich die Werkzeugeinheiten (61, 61') überschneiden, wobei die Enden benachbarter Werkzeugelemente (62) der einen Werkzeugeinheit (61) zwischen den Enden benachbarter Werkzeugelemente (62') der anderen Werkzeugeinheit (61') zu liegen kommen.

23. Vorrichtung nach einem der vorhergehenden Ansprüche, **dadurch gekennzeichnet, dass** die Zwangssteuerungsmittel einen Keilschieber (63) und Führungsschieber (64) mit korrespondierenden Schrägflächen (65, 66) umfassen.

24. Vorrichtung nach Anspruch 23, **dadurch gekennzeichnet, dass** zwischen Pressteil (52) und Keilschieber (63) ein Distanzstück (67) mit mindestens einer Druckfeder (87), welche sich gegen das Pressteil (52) abstützt, vorgesehen ist.

25. Vorrichtung nach Anspruch 23 oder 24, **dadurch gekennzeichnet, dass** der Führungsschieber (64) sich in ein Druckteil (73) erstreckt und in dieser geführt ist.

26. Vorrichtung nach einem der Ansprüche 23 bis 25, **dadurch gekennzeichnet, dass** der Keilschieber (63) sich über ein Keilstück (68) auf dem Druckteil (73) abstützt, wobei die Keilschrägen (69, 70) von Keilschieber (63) und Keilstück (68) miteinander korrespondieren.

27. Vorrichtung nach einem der Ansprüche 23 bis 26, **dadurch gekennzeichnet, dass** der Keilschieber (63) mittels einer Druckfeder (71), welche sich von einem weiteren Führungsschieber (72) abstützt, vorgespannt ist.

28. Vorrichtung nach einem der Ansprüche 23 bis 27, **dadurch gekennzeichnet, dass** das Keilstück (68) an einem durch das Druckteil (73) hindurch greifenden Abschnitt eine Aufnahme (74) für die Werkzeugaufnahme (58) aufweist.

29. Vorrichtung nach einem der Ansprüche 11 bis 28, **dadurch gekennzeichnet, dass** Führungselemente (91) zum Führen der mindestens einen Betätigungsstange (77) und der Führungsschieber (64, 72) an dem Druckteil (73) angeordnet sind.

30. Vorrichtung nach einem der vorhergehenden Ansprüche, **dadurch gekennzeichnet, dass** das Pressteil (52) beim Absenken oder Anheben geführt ist, vorzugsweise mittels wenigstens einem in Richtung der ersten Achse (54) an dem Pressteil (52) angeordneten Säulenelement (92), welches in einer Bohrung des Druckteils (73) geführt ist.

## Claims

1. Device for working protruding projections, teeth, slithers, crimps or the like from a brake lining carrier plate, with a tool unit (51; 61, 61') by means of which a press part (52) can be driven into the brake lining carrier plate and subsequently removed therefrom again, wherein the tool unit (51; 61, 61') consists of several tool elements (52; 62, 62') with cutting teeth (84) and during the crimping process is moved in the direction of a first axis (54) substantially corresponding with a surface normal of the brake lining carrier plate and in the direction of a second axis (55) perpendicular thereto, and with positive control means, which are arranged between the press part (52) and tool unit (51; 61, 61'), for moving the tool unit (51; 61, 61') in the direction of the first axis (54) as well as positive guide means for moving the tool unit (51; 61, 61') in the direction of the second axis (55), wherein the tool elements (53; 62, 62') of the tool unit (61; 61, 61') are arranged to be fixed in position relative to one another, **characterised in that** the tool elements (52; 62, 62') are oriented to be fan-shaped in the length direction thereof.

2. Device according to claim 1, **characterised in that** the tool elements (53; 62, 62') are held in a tool mount (58) and, for a fan-shaped orientation, at least one spacer (81) is arranged between adjacent tool elements (53; 62, 62').

3. Device according to claim 1 or 2, **characterised in that** the spacer (81) is retained by friction coupling and/or mechanically positive coupling, in particular welded to one of the two adjacent tool elements (53; 62, 62').

4. Device according to claim 2 or 3, **characterised in that** the tool elements (53; 62, 62') can be clamped in place between support elements (78, 79, 82, 83) of the tool mount (58).

5. Device according to claim 4, **characterised in that** the tool elements (53; 62, 62') can be secured by means of a support element (82) of the tool mount (58) against displacement in the direction of the first axis (54).

6. Device according to any one of the preceding claims, **characterised in that** the cutting piece (84) of the tool elements (53; 62, 62') are arranged to be distributed in circles or on elliptical tracks.

7. Device according to any one of the preceding claims, **characterised in that** the tool elements (53; 62, 62') are of the same construction.

8. Device according to claim 7, **characterised in that** the distribution of the cutting teeth (84) is formed by a circularly or elliptically shaped support edge (80) of one of the support elements (78, 82).

9. Device according to any one of the preceding claims, **characterised in that** the tooth tips face in the displacement direction (85).

10. Device according to any one of the preceding claims, **characterised in that** the positive guide means are formed by at least one slide element, which is actuable by a preferably hydraulic or pneumatic adjusting device and the tool unit (51; 61, 61') moves in the direction of the second axis (55) during or after lowering of the press part (52).

11. Device according to any one of claims 1 to 9, **characterised in that** the positive guide means is formed by at least one slide element (56, 56') and at least one actuating rod (77) arranged at the press part (52) in the direction of the first axis (54), which element and rod have inclined surfaces (88, 89), which slide on one another, for movement of the slide element (56, 56') in the direction of the second axis (55) during lowering of the press part (52).

12. Device according to claim 10 or 11, **characterised in that** the slide element is constructed as a thrust slide (56) with an inclined surface (88) facing away from the tool unit (51; 61, 61') or as a draw slide (56') with an inclined surface (88) oriented towards the tool unit (51; 61, 61').

13. Device according to any one of the preceding claims, **characterised in that** the tool unit (51; 61, 61') is displaceable against a restoring force, particularly a force of at least one restoring spring (57) supported against a part (59) fixed relative to the housing.

14. Device according to claim 13, **characterised in that** in a case of a slide element (56') constructed as a draw slide the restoring force engages the side of the tool unit (61, 61') facing the slide element (56').

15. Device according to claim 13, **characterised in that** in the case of a slide element (56) constructed as a thrust slide the restoring force engages the side of the tool unit (51) facing away from the slide element (56).

16. Device according to any one of the preceding claims, **characterised in that** the travel path (60), which is produced in the direction of the second axis (55), for the tool unit (51; 61, 61') is 3 millimetres to 7 millimetres, preferably approximately 5 millimetres.

17. Device according to any one of the preceding claims, **characterised in that** two tool units (61, 61') with tool elements (62, 62') for processing in common of one or two brake lining carrier plates are provided and are movable in opposite directions for producing the protruding projections, teeth, slivers, crimps or the like.

18. Device according to claim 17, **characterised in that** the tool units (61, 61') are arranged between the slide elements (56, 56').

19. Device according to claim 17 or 18, **characterised in that** in the case of fan-shaped arrangement of the tool elements (62, 62') the two tool units (61, 61') diverge in opposite directions or in the same direction.

20. Device according to claim 19, **characterised in that** in the case of the arrangement diverging in the same direction the tool elements (62, 62') of the two tool units (61, 61') have substantially the same centre of convergence.

21. Device according to claim 19, **characterised in that** the tool elements (62, 62') of the two tools (61, 61') respectively run towards one another in fan shape.

22. Device according to any one of claims 17 to 21, **characterised in that** the tool units (61, 61') intersect in the initial position, wherein the ends of adjacent tool elements (62) of one tool unit (61) come to lie between the ends of adjacent tool elements (62') of the other tool unit (61').

23. Device according to any one of the preceding claims, **characterised in that** the positive control means comprises a wedge slide (63) and guide slide (64) with corresponding inclined surfaces (65, 66).

24. Device according to claim 23, **characterised in that** a spacer (67) with at least one compression spring (87), which is supported against the press part (52), is provided between the press part (52) and wedge slide (63).

25. Device according to claim 23 or 24, **characterised in that** the guide slide (64) extends in a pressure part (73) and is guided therein.

26. Device according to any one of claim 23 to 25, **characterised in that** the wedge slide (63) is supported on the pressure part (73) by way of a wedge member (68), wherein the wedge slopes (69, 70) of wedge slide (63) and wedge member (68) correspond with one another.

27. Device according to any one of claims 23 to 26, **characterised in that** the wedge slide (63) is biased by means of a compression spring (71) supported by a further guide slide (72).

28. Device according to any one of claims 23 to 27, **characterised in that** the wedge member (68) has, at a section engaging through the pressure part (73), a receptacle (74) for the tool mount (58).

29. Device according to any one of claims 11 to 28, **characterised in that** the guide elements (91) for guidance of the at least one actuating rod (77) and the guide slide (64, 72) are arranged at the pressure part (73).

30. Device according to any one of the preceding claims, **characterised in that** the press part (52) is guided during lowering or raising preferably by means of at least one column element (92), which is arranged at the press part (52) in the direction of the first axis (54) and which is guided in a bore of the pressure part (73).

## Revendications

1. Dispositif pour usiner des projections, des dents, des copeaux, des retraits ou analogues saillant d'une plaque support de garniture de frein, comprenant une unité d'outillage (51 ; 61, 61'), qui est entraînée au moyen d'une pièce de presse (52) dans la plaque support de garniture de frein et en est retirée ensuite, dans lequel l'unité d'outillage (51 ; 61, 61') est constituée de plusieurs éléments d'outil (53 ; 62, 62') avec des dents de coupe (84) et est déplacée, au cours de l'opération de retrait, dans la direction d'un premier axe (54) coïncidant sensiblement avec la normale à la surface de la plaque support de garniture de frein et dans la direction d'un second axe (55) perpendiculaire au premier axe, et des moyens de commande forcée aménagés entre la pièce de presse (52) et l'unité d'outillage (51 ; 61, 61') pour déplacer l'unité d'outillage (51 ; 61, 61') dans la direction du premier axe (54) ainsi que des moyens de guidage forcé pour déplacer l'unité d'outillage (51 ; 61, 61') dans la direction du second axe (55), les éléments d'outil (53 ; 62, 62') de l'unité d'outillage (51 ; 61, 61') étant aménagés en position fixe les uns par rapport aux autres, **caractérisé en ce que** les éléments d'outil (53 ; 62, 62') sont ajustés en éventail dans leur extension longitudinale.

2. Dispositif selon la revendication 1, **caractérisé en ce que** les éléments d'outil (53 ; 62, 62') sont maintenus dans un logement d'outillage (58) et au moins une pièce d'espacement (81) est agencée entre des éléments d'outil voisins (53 ; 62, 62') pour un ajustement en éventail.

3. Dispositif selon la revendication 1 ou 2, **caractérisé en ce que** la pièce d'espacement (81) est maintenue par friction et/ou adaptation de formes, en particulier soudé sur l'un des deux éléments d'outil voisins (53 ; 62, 62').

4. Dispositif selon la revendication 2 ou 3, **caractérisé en ce que** les éléments d'outil (53 ; 62, 62') peuvent être montés entre des éléments d'appui (78, 79, 82, 83) du logement d'outillage (58).

5. Dispositif selon la revendication 4, **caractérisé en ce que** les éléments d'outil (53 ; 62, 62') peuvent être sécurisés contre un déplacement dans la direction du premier axe (54) au moyen d'un élément d'appui (82) du logement d'outillage (58).

6. Dispositif selon l'une quelconque des revendications précédentes, **caractérisé en ce que** les dents de coupe (84) des éléments d'outil (53 ; 62, 62') sont aménagées réparties en arc de cercle ou en portions elliptiques.

7. Dispositif selon l'une quelconque des revendications précédentes, **caractérisé en ce que** les éléments d'outil (53 ; 62, 62') sont conformés de la même manière.

8. Dispositif selon la revendication 7, **caractérisé en ce que** la répartition des dents de coupe (84) est formée par une arête d'appui (80) en forme d'arc de cercle ou d'ellipse d'un des éléments d'appui (78, 82).

9. Dispositif selon l'une quelconque des revendications précédentes, **caractérisé en ce que** les pointes de dents sont tournées dans la direction de déplacement (85).

10. Dispositif selon l'une quelconque des revendications précédentes, **caractérisé en ce que** les moyens de guidage forcé sont formés par au moins un coulisseau, qui peut être commandé par un dispositif d'ajustement de préférence hydraulique ou pneumatique et **en ce que** l'unité d'outillage (51 ; 62, 62') se déplace pendant ou après l'abaissement de la pièce de presse (52) dans la direction du second axe (55).

11. Dispositif selon l'une quelconque des revendications 1 à 9, **caractérisé en ce que** les moyens de guidage forcé sont formés par au moins un coulisseau (56, 56') et au moins une tige de commande (77) aménagée dans la direction du premier axe (54) sur la pièce de presse (52), qui présentent des surfaces obliques (88, 89) glissant l'une sur l'autre pour déplacer le coulisseau (56, 56') dans la direction du second axe (55) lors de l'abaissement de la pièce de presse (52).

12. Dispositif selon la revendication 10 ou 11, **caractérisé en ce que** le coulisseau se présente sous la forme d'un curseur à pression (56) avec une surface oblique (88) opposée à l'unité d'outillage (51 ; 62, 62') ou d'un curseur à traction (56') avec une surface oblique (88) tournée vers l'unité d'outillage (51, 61, 61').

13. Dispositif selon l'une quelconque des revendications précédentes, **caractérisé en ce que** l'unité d'outillage (51 ; 61, 61') peut être déplacée à l'encontre d'une force de rappel, en particulier d'une force d'au moins un ressort de rappel (57) s'appuyant contre une partie (59) fixée sur le boîtier.

14. Dispositif selon la revendication 13, **caractérisé en ce que**, dans le cas d'un coulisseau (56') conformé en curseur à traction, la force de rappel s'applique sur le côté de l'unité d'outillage (61, 61') tourné vers le coulisseau (56').

15. Dispositif selon la revendication 13, **caractérisé en ce que**, dans le cas d'un coulisseau (56) conformé en curseur à pression, la force de rappel s'applique sur le côté de l'unité d'outillage (51) opposé au coulisseau (56).

16. Dispositif selon l'une quelconque des revendications précédentes, **caractérisé en ce que** le trajet de déplacement (60) produit dans la direction du second axe (55) pour l'unité d'outillage (51 ; 61, 61') est de 3 mm à 7 mm, de préférence environ 5 mm.

17. Dispositif selon l'une quelconque des revendications précédentes, **caractérisé en ce qu'**il est prévu deux unités d'outillage (61, 61') avec des éléments d'outil (62, 62') pour usiner conjointement une ou deux plaques supports de garniture de frein, qui peuvent être déplacées dans la direction opposée pour produire des saillies, des dents, des copeaux, des retraits ou analogues.

18. Dispositif selon la revendication 17, **caractérisé en ce que** les unités d'outillage (61, 61') sont aménagées entre les coulisseaux (56, 56').

19. Dispositif selon la revendication 17 ou 18, **caractérisé en ce que**, dans le cas d'un aménagement en éventail, les éléments d'outil (62, 62') des deux unités d'outillage (61, 61') divergent dans la direction opposée ou dans la même direction.

20. Dispositif selon la revendication 13, **caractérisé en ce que**, dans le cas d'un aménagement divergent dans la même direction, les éléments d'outil (62, 62') des deux unités d'outillage (61, 61') présentent un centre de convergence sensiblement identique.

21. Dispositif selon la revendication 19, **caractérisé en ce que** les éléments d'outil (62, 62') des deux outils s'étendent l'un par rapport à l'autre respectivement en éventail.

22. Dispositif selon l'une quelconque des revendications 17 à 21, **caractérisé en ce que**, dans la position de départ, les unités d'outillage (61, 61') se coupent, les extrémités d'éléments d'outil voisins (62) de la première unité d'outillage (61) venant se trouver entre les extrémités d'éléments d'outil voisins (62') de l'autre unité d'outillage (61').

23. Dispositif selon l'une quelconque des revendications précédentes, **caractérisé en ce que** les moyens de commande forcée comprennent un curseur à cale (63) et un curseur de guidage (64) avec des surfaces obliques correspondantes (65, 66).

24. Dispositif selon la revendication 23, **caractérisé en ce qu'**il est prévu entre la pièce de presse (52) et le curseur à cale (63) une pièce d'espacement (67) avec au moins un ressort de compression (87), qui s'appuie contre la pièce de presse (52).

25. Dispositif selon la revendication 23 ou 24, **caractérisé en ce que** le curseur de guidage (64) s'étend dans une pièce de pression (73) et est guidé dans celle-ci.

26. Dispositif selon l'une quelconque des revendications 23 à 25, **caractérisé en ce que** le curseur à cale (63) s'appuie sur une cale sur la pièce de pression (73), dans lequel les inclinaisons (69, 70) du curseur à cale (63) et de la cale (68) se correspondent l'une l'autre.

27. Dispositif selon l'une quelconque des revendications 23 à 26, **caractérisé en ce que** le curseur à cale (63) est soumis à une précontrainte au moyen d'un ressort de compression (71), qui s'appuie sur un autre curseur de guidage (72).

28. Dispositif selon l'une quelconque des revendications 23 à 27, **caractérisé en ce que** la cale (68) présente un logement (74) pour le logement d'outillage (58) sur une section s'engageant à travers la partie de pression (73).

29. Dispositif selon l'une quelconque des revendications 11 à 28, **caractérisé en ce que** les éléments de guidage (91) pour guider la au moins une tige de commande (77) et le curseur de guidage (64, 72) sont aménagés sur la partie de pression (73).

30. Dispositif selon l'une quelconque des revendications précédentes, **caractérisé en ce que** la pièce de presse (52) est guidée lors de son abaissement ou de son relèvement, de préférence au moyen d'au moins un élément de colonne (92) aménagé sur la pièce de presse (52) dans la direction du premier axe (54), lequel élément de colonne est guidé dans un perçage de la partie de pression (73).
